# EUROPEAN PATENT APPLICATION

(11) **EP 3 468 000 A1**
(43) Date of publication of application: **10.04.2019**
(21) Application number: 17802165.5
(22) Date of filing: 23.05.2017
(51) Int. Cl.: H02K 1/02, H02K 1/27, H02K 21/00

(54) **PERMANENT MAGNET SYNCHRONOUS MOTOR AND ELECTRIC VEHICLE**

(30) Priority: 27.05.2016 CN 201610369622; 27.05.2016 CN 201620505212 U
(71) Applicant: BYD Company Limited, Shenzhen, Guangdong 518118 (CN)
(72) Inventor: MA, Bingqing, Shenzhen Guangdong 518118 (CN); WU, Shixun, Shenzhen Guangdong 518118 (CN); QI, Wenming, Shenzhen Guangdong 518118 (CN)
(74) Representative: Haseltine Lake LLP
(86) International application number: PCT/CN2017/085591
(87) International publication number: WO 2017/202319

(57) **Abstract**

The present invention discloses a permanent magnet synchronous motor and an electric automobile. The permanent magnet synchronous motor includes a shell (400), and a motor rotor (300) and a motor stator (500) installed in the shell (400), where the motor rotor includes a rotor iron core (310) manufactured from an amorphous alloy material, and the motor stator (500) includes a stator iron core manufactured by a silicon steel material. The permanent magnet synchronous motor provided by the present invention can provide a relatively large power output in a relatively small size, and is particularly applicable to a drive motor running at a super high speed.

## Description

### FIELD

The present invention relates to the field of motor technologies, and specifically, to a permanent magnet synchronous motor and an electric automobile having the permanent magnet synchronous motor.

### BACKGROUND

As a drive device, motors are widely applied to various fields. In recent years, with the rise of electric automobiles, drive motors for driving vehicles to move are obviously important. It is well-known that a motor mainly includes a shell, a stator component, and a rotor component. For example, in some existing technologies, the shell includes a barrel having an opening at a front end, and the stator component is disposed in the shell. The stator component includes a stator iron core and an iron core winding. The rotor component includes a shaft, a permanent magnet, and a rotor iron core. The rotor iron core is sleeved on the shaft, and a plurality of permanent magnets is evenly distributed on the periphery of the rotor iron core. An end face is disposed at the front end of the shell, and a junction box is disposed at an upper end of the shell to supply power for the winding. Therefore, a rotation driving function of the motor is implemented. A drive motor of an electric automobile generally requires a large driving force and a small volume. How to resolve this contradiction is an important subject to be researched in the field.

### SUMMARY

The objective of the present invention is to provide a permanent magnet synchronous motor and an electric automobile having the permanent magnet synchronous motor.

To achieve the foregoing objective, the present invention provides a permanent magnet synchronous motor, including a shell, and a motor rotor and a motor stator installed in the shell, where the motor rotor includes a rotor iron core manufactured from an amorphous alloy material, and the motor stator includes a stator iron core manufactured by a silicon steel material.

The present invention further provides an electric automobile, including a drive motor, where the drive motor is the permanent magnet synchronous motor provided by the present invention.

Through the foregoing technical solutions, the permanent magnet synchronous motor provided by the present invention can provide a relatively large power output in a relatively small size, and is particularly applicable to a drive motor running at a super high speed.

Other features and advantages of the present invention are described in detail in the following specific implementations.

### BRIEF DESCRIPTION OF THE DRAWINGS

The accompanying drawings are used to facilitate further understanding of the present invention, and are a part of this specification. The accompanying drawings are used to explain the present invention together with the following specific implementations, but constitute no limitation on the present invention. In the figures:
Fig. 1 is a three-dimensional view of a first viewing angle of a motor according to a specific implementation of the present invention;
Fig. 2 is a three-dimensional view of a second viewing angle of a motor according to a specific implementation of the present invention;
Fig. 3 is a schematic exploded view of a motor according to a specific implementation of the present invention;
Fig. 4 is a schematic structural diagram of a motor rotor punching piece according to a specific implementation of the present invention;
Fig. 5 is a schematic structural diagram of a magnetic steel groove according to a specific implementation of the present invention, where to clearly display an included angle, with other features unchanged, the included angle is enlarged for several times for displaying; and
Fig. 6 is a simple structural diagram of an electric automobile according to a specific implementation of the present invention.

### DETAILED DESCRIPTION

The following describes specific implementations of the present invention in detail with reference to the accompanying drawings. It should be understood that, the specific implementations described herein are merely used to describe and explain the present invention, and are not intended to limit the present invention.

In the present invention, unless specified otherwise, the used orientation terms such as "upper, lower, left, and right" are generally defined based on a surface direction of the accompanying drawings, and "inner and outer" refer to an inner side and an outer side of a corresponding component outline.

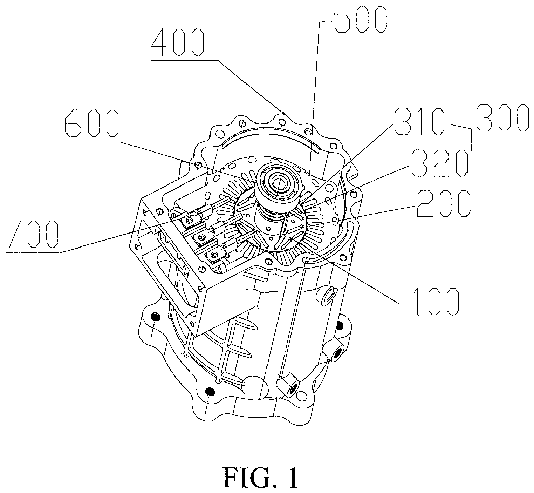

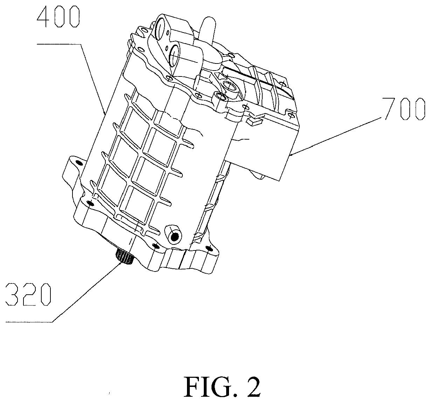

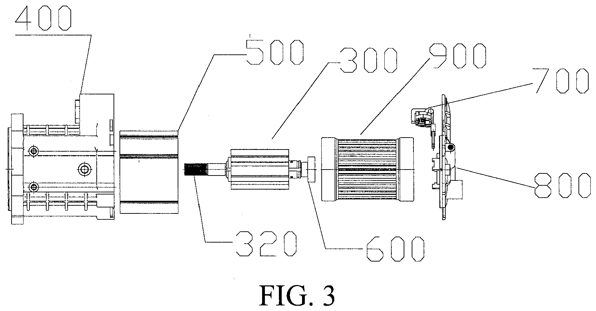

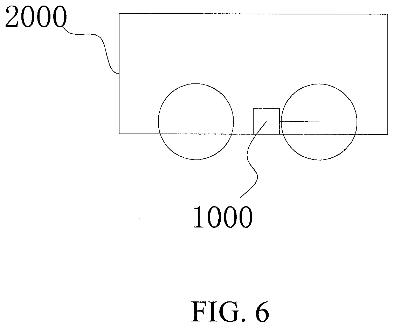

As shown in Fig. 1 to Fig. 6, the present invention at least provides a motor rotor punching piece, a motor rotor, a motor 1000, and an electric automobile 2000. The motor 1000 may be a two-pair-of-pole motor, a permanent magnet synchronous motor, or a two-pair-of-pole permanent magnet synchronous motor. In addition, the motor of the present invention may also be of other motor types well-known in the field, for example, an asynchronous motor, and particularly, a super high speed motor, that is, a motor having a rotating speed over 20000 rpm (revolutions/per minute). The various motors mentioned in the present invention are also particularly applicable to a drive motor of an electric automobile for use.

The "two-pair-of-pole" and "permanent magnet synchronous" mentioned in the present invention are terms well-known in the field. For example, two-pair-of-pole means that two pairs of magnetic poles are disposed on a motor rotor. If a quantity of pairs of magnetic poles is larger, when a rotating speed of a motor is high, particularly when the motor of the present invention is a super high speed motor, an alternative frequency of a magnetic field is higher, a quantity of heat generated by the motor is larger, a requirement for a cooling system is also higher, and an iron loss of the motor is also increased. Therefore, the two-pair-of-pole motor is applicable to a drive motor running at a super high speed for use. Certainly, in other possible implementations, a three-pair-of-pole motor or a four-pair-of-pole motor may also be used.

In addition, the permanent magnet synchronous motor is also applicable to a drive motor of an electric automobile for use. In performance, it may include advantages of high efficiency, a high power factor, a small volume, a low weight, and a low temperature rise. Specifically, for example, after a permanent magnet is embedded in a rotor of the permanent magnet synchronous motor, the permanent magnet establishes a rotor magnetic field, and during normal work, the rotor magnetic field and a stator magnetic field run synchronously, the rotor has no induced current, and there is no rotor resistance loss. Therefore, motor efficiency can be significantly improved. In addition, when being started, the motor has sufficiently large starting torque, and does not need an excessively large starting current. The motor is applicable to a drive motor driven by a power battery pack. In addition, the permanent magnet synchronous motor has high efficiency, a rotor winding has a relatively low resistance loss, and a stator winding has few reactive currents or barely has a reactive current, so that a temperature rise of the motor is low, and service life of the motor can also be prolonged. Other advantages brought by the permanent magnet synchronous motor are not described in detail herein. In conclusion, the permanent magnet synchronous motor has a simple structure, so that processing and power distribution costs of the permanent magnet synchronous motor are reduced, and running is more reliable. In addition, after the permanent magnet synchronous motor uses a rare-earth permanent magnet, air-gap flux density is enlarged, and the rotating speed of the motor is increased to the best, thereby obviously reducing the volume of the motor, and improving a power mass ratio. In addition, because an excitation copper loss is omitted, motor efficiency is obviously improved.

In structure, as shown in Fig. 1 to Fig. 4, a motor provided by an implementation of the present invention includes a shell 400, and a motor rotor 300 and a motor stator 500 installed in the shell 400. The motor stator 500 is fixedly disposed in the shell 400, and the motor rotor 300 is disposed in a center of the motor stator 500 in a rotatable manner. The motor rotor 300 includes a rotor iron core 310 formed by stacking a plurality of rotor punching pieces, and a shaft 320 in transmission connection to the rotor iron core 310. Specifically, in this implementation, a shaft hole 101 is formed in a gyration center of a punching piece body 100 of the rotor iron core, and a pair of keys 102 for matching a shaft are symmetrically formed on a side wall of the shaft hole 101, that is, the rotor iron core 310 and the shaft 320 are connected by using keys. In other implementations, the rotor iron core 310 and the shaft 320 may be connected in other transmission connection manners well-known by a person skilled in the art, for example, in a profile connection manner of a non-circular section. In addition, an oil hole 103 may be further formed on the rotor punching piece, to form a part of a rotor oil passage, and the rotor may be cooled by making lubricating oil circulate in the rotor.

In addition, the shell 400 has an end cover 800 far away from a power output end, a bearing chamber may be formed on the end cover 800, an inner end of the shaft 320 is installed in the bearing chamber by using a deep groove ball bearing 600, and an outer end extending from the shell 400 may be used as the power output end. In addition, a junction box 700 installed on the shell may be externally connected to a power source, for example, electrically connected to a power battery pack to generate a magnetic field by supplying power to a winding 900, thereby implementing working of the motor. In addition, an air gap is further disposed between a rotor and a stator of the motor, so that the motor can work normally.

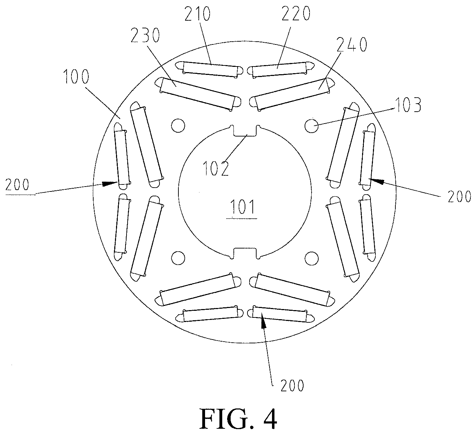

In an implementation of the present invention, as shown in Fig. 4, the provided motor rotor punching piece includes a punching piece body 100, and a magnetic steel groove 200 for inserting a magnetic steel is formed on the punching piece body 100, that is, the magnetic steel is used as a permanent magnet to form a rotor magnetic pole, that is, the permanent magnet in this implementation uses an embedded manner. In this way, stability of the rotor during rotation at a super high speed can be effectively ensured. Compared with a surface-mounted installation manner of the permanent magnet, the embedded installation manner of the permanent magnet is more applicable to a rotor rotating at a super high speed. When the rotor rotates at a high speed, particularly, at a super high speed, a magnetic steel accommodated in the magnetic steel groove has a deformation trend under the effect of a centrifugal force, that is, a tensile stress is generated inside the magnetic steel, and the magnetic steel bears a compressive stress due to a resistance of the magnetic steel groove. The tension resistance strength of the magnetic steel is far lower than the compression resistance strength. In an embodiment of the magnetic steel, the tension resistance strength is only 85 Mpa, while the compression resistance strength may reach over 1000 Mpa. Therefore, the generated tensile stress may affect service life of the magnetic steel. Based on this, in this implementation, to improve the service life of the magnetic steel, a groove shape of the magnetic steel groove is improved, and the manner may include converting the tensile stress borne by the magnetic steel into the compressive stress.

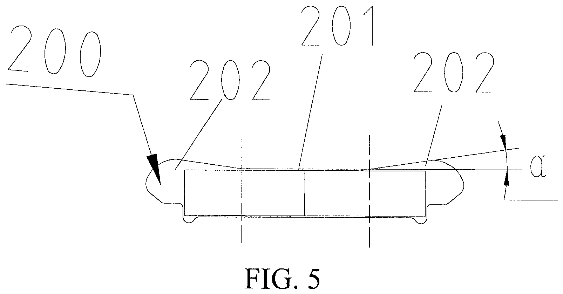

As shown in Fig. 5, the magnetic steel groove 200 has a straight groove section 201 along a surface direction of the punching piece body 100 and an inclination section 202 located on both sides of the straight groove section 201, a first side edge of the inclination section 202 far away from the gyration center of the punching piece body 100 inclines outward from an end portion of the straight groove section 201, and the straight groove section 201 and the inclination section 202 located on both sides of the straight groove section 201 jointly construct a closed sectional outline of the magnetic steel groove 200 on a surface of the punching piece body 100. As shown in Fig. 5, the closed sectional outline of the magnetic steel groove 200 on the surface of the punching piece body 100 is segmented into the straight groove section 201 and the inclination section 202 by dashed lines. In this way, by disposing the inclination section 202 inclining outward on both sides of the straight groove section 201, a buffer area generating slight deformation may be provided for two ends of the magnetic steel in the magnetic steel groove 200, that is, when the rotor rotates, the magnetic steel is allowed to slightly deform in the magnetic steel groove 200, to release the tensile stress generated inside the magnetic steel, and further increase the service life of the magnetic steel.

Specifically, in this implementation, to improve the magnetic steel groove 200, an opening angle may be formed on the existing straight magnetic steel groove. Because the deformation of the magnetic steel is relatively slight, to avoid causing excessively large impact on the strength of the rotor punching piece, in this implementation, an included angle α between the first side edge of the inclination section 202 and the straight groove section 201 ranges from 0.5° to 2°, for example, an inclination of 1° is used. Herein, it should be noted that, Fig. 5 is a view of the included angle α obtained after being enlarged for several times with other features unchanged, to schematically and clearly display the inclination section 202. The improvement for the magnetic steel groove 200 can effectively increase the service life of the magnetic steel.

In an implementation of the present invention, the punching piece body 100 is manufactured from an amorphous alloy material, that is, the rotor iron core in this implementation of the present invention is manufactured from an amorphous alloy material, and the strength of the punching piece body 100 may be increased.

It is well-known that the tension resistance strength in characteristics of the amorphous alloy material is dozens of times that of an ordinary silicon steel material. Therefore, the strength sacrifice of the punching piece body 100 caused by the improvement for the magnetic steel groove 200 can be remedied by the material, and the strength is greatly higher than the strength of a rotor punching piece of a silicon steel material in the prior art, so that the service life of the magnetic steel can be ensured and the strength and service life of the rotor iron core can also be ensured.

In addition, in an implementation of the present invention, because the rotor iron core is manufactured from an amorphous alloy material, the rotor iron core may have features such as high magnetic conductivity, high electrical conductivity, and a small eddy-current loss, and motor performance is more significantly improved. It should be mentioned that, manufacturing the rotor iron core by using the amorphous alloy material not only can improve a rotor capability, but also can resolve a key problem of implementing a large power output by using a small volume, so that a drive motor in the electric automobile field gains a huge progress.

Specifically, the design idea of the inventor of the present invention lies in: The inventor found that in the electric automobile field, in consideration of a space layout, it is very difficult to make a large volume of a motor. Therefore, it is difficult to increase torque of the motor. Therefore, to increase power, it can be known according to the formula p=T*n/9550 that, when the volume is fixed, the rotating speed may be increased to implement the large power output. Therefore, the inventor of the present invention generates a motivation of using a motor with a small volume and a large rotating speed as a drive motor of an electric automobile. The inventor also considers that after the rotating speed of the motor reaches a super high speed of 20000 rpm, limited by the yield strength of an ordinary silicon steel sheet, a volume of a designed motor is excessively small. When the volume of the motor is excessively small, although the rotating speed is relatively high, torque of a motor output is still directly affected, and therefore, the requirement of the drive motor cannot be met.

In consideration of these factors, the inventor of this application uses the amorphous alloy material to form the rotor to resolve the problem of a limited outer diameter of the rotor, that is, when it can be ensured that the motor rotates at a super high speed, the volume of the motor can be increased as much as possible to increase the torque to further increase the power of the motor. Further, not all components in the motor provided by the present invention are manufactured simply by using the amorphous alloy material. In addition to a cost factor, in the present invention, it is further found that under a current process condition, a width of an amorphous alloy strip is limited, and if the amorphous alloy strip is still used to make a motor stator, a produced motor may also be excessively small and a power output of the motor may also be affected. In addition, because a magnetostriction coefficient of the amorphous alloy material is relatively large, vibration noise of the motor is relatively large. Therefore, in the various motors provided by the implementations of the present invention, only the rotor iron core is manufactured by using the amorphous alloy material, and the stator may be manufactured by using the silicon steel material. Therefore, in the implementations of the present invention, a structure that the rotor uses the amorphous alloy material, and the stator uses the original silicon steel material is a result obtained by comprehensively considering factors of all aspects, and needs a lot of creative efforts of the inventor.

In addition, further, this coincides with the foregoing idea of manufacturing the rotor iron core by using the amorphous alloy material to increase the service life of the magnetic steel during rotating at a super high speed. In this way, in the present invention, skillfully using the amorphous alloy material to manufacture the rotor not only can achieve a beneficial effect of improving the service life of the magnetic steel during rotating at a super high speed, but also can make the volume of the designed motor be relatively small but not excessively small, that is, manufacturing the rotor iron core by using the amorphous alloy material further generates an unexpected technical effect, and implements various effects of one feature. This is particularly applicable to the requirement of a drive motor that needs large power and a small volume, so that performance of the drive motor is significantly improved.

In an implementation of the present invention, as shown in Fig. 5, to ensure consistent deformation on both sides of the magnetic steel, two inclination sections 202 may be designed to be symmetrically disposed with respect to a central axis of the straight groove section 201. That is, the two inclination sections 202 have a basically same structure. In addition, to implement the structure of the magnetic steel, a second side edge of the inclination section 202 near to the gyration center of the punching piece body 100 is arranged on a same line as the straight groove section 201. That is, only a first side edge line on an outer side of the inclination section 202 inclines relative to the straight groove section 201, to ensure slight outward deformation of two ends of the magnetic steel under the effect of a centrifugal force, and further better make the magnetic steel be accommodated and maintained in the magnetic steel groove 200. The first side edge and the second side edge of the inclination section 202 match the straight groove section 201 by bending a side edge connection, to form a closed sectional outline. Specifically, further, to better adapt to the deformation of the magnetic steel, a length of the straight groove section 201 may be designed to occupy 1/2 to 3/4 of a length of the magnetic steel accommodated in the magnetic steel groove along a surface of the punching piece body 100. Therefore, the deformation of the magnetic steel is well buffered, to avoid unnecessary destruction applied to the magnetic steel by the magnetic steel groove.

The foregoing describes the improvement for the groove shape of the magnetic steel groove 200, and the following describes the improvement for a magnetic pole arrangement of the punching piece of the motor rotor in the implementations of the present invention.

To form a rotor magnetic pole, as shown in Fig. 4, there is a plurality of magnetic steel grooves 200, and the plurality of magnetic steel grooves 200 forms a magnetic steel groove group that constructs a rotor magnetic pole, that is, the plurality of magnetic steel grooves 200 forms a magnetic steel groove group and the magnetic steel groove group constructs the rotor magnetic pole, where one magnetic steel groove group can form one rotor magnetic pole. Specifically, the magnetic steel groove group includes a first magnetic steel groove 210 and a second magnetic steel groove 220 symmetrically arranged with respect to a first diameter of the punching piece body (for example, the first diameter is a diameter along a vertical direction on the punching piece body 100, as shown in Fig. 4), and the first magnetic steel groove 210 and the second magnetic steel groove 220 are arranged in a first V shape with an outward opening. In other words, an arrangement manner of the magnetic steel of the present invention is a V-shaped structure. Likewise, to generate a relatively large magnetic field on a relatively small size, in this implementation, the magnetic steel groove group further includes a third magnetic steel groove 230 and a fourth magnetic steel groove 240 symmetrically arranged with respect to the first diameter, and the third magnetic steel groove 230 and the fourth magnetic steel groove 240 are arranged in a second V shape with an outward opening and are disposed on inner sides of radial directions of the first magnetic steel groove 210 and the second magnetic steel groove 220 at intervals. That is, one magnetic pole in the present invention may include four magnetic steels, thereby fully using space of the punching piece body. This is particularly applicable to a drive motor having a relatively small volume. To optimize a layout of the four magnetic steels in a same group and properly use the space, optionally, an included angle in the second V shape is less than an included angle in the first V shape. In this way, a magnetic steel on an outer side can better use space in a string direction of the punching piece body, and a magnetic steel on an inner side can better use space in a radial direction of the punching piece body, so that the layout is more proper, and a magnetic field is generated more effectively.

To generate an even magnetic field, in this implementation, there is a plurality of the magnetic steel groove groups to separately construct a plurality of rotor magnetic poles, and a quantity of the plurality of magnetic steel groove groups is an even number and is evenly distributed on the punching piece body along a circumferential direction. In the two-pair-of-pole motor provided by the present invention, correspondingly, there are four magnetic steel groove groups to construct two pairs of poles of the motor rotor. In other implementations, with the different pairs of magnetic poles, a different quantity of magnetic steel groove groups may be disposed.

In this implementation, to ensure the strength of the punching piece body, an oil hole 103 evenly distributed along the circumferential direction is formed on the punching piece body 100, and the oil hole 103 is located between neighboring magnetic steel groove groups, to fully use the space of the punching piece body. In addition, the oil hole 103 may be provided to reduce a weight of the rotor to reduce a rotational inertia of the rotor. In addition, in this implementation, a shaft hole 101 is formed in the gyration center of the punching piece body 100, a pair of keys 102 for matching a shaft are symmetrically formed on a side wall of the shaft hole 101, and the key 102 protrudes toward a circle center and the pair of keys 102 are located on the first diameter. That is, the key is a protruded structure instead of a recessed structure, to facilitate matching a key groove on the shaft to transmit torque.

In addition, to ensure the strength of the punching piece body, in this implementation, in the magnetic steel groove group, a reinforcing rib is disposed between the symmetrically arranged magnetic steel grooves, to enhance the strength of the punching piece body. In addition, a magnetic isolating bridge or a magnetic isolating hole is disposed between edges of the magnetic steel groove and the punching piece body. A smaller magnetic isolating bridge may be better, to reduce magnetic leakage, and increase air-gap flux density. In addition, the magnetic isolating hole can improve an air-gap flux density waveform, to increase motor performance.

The motor provided in the present invention is more applicable to a drive motor of an electric automobile, where an iron loss is relatively low, output power is increased, and a problem of large noise brought by an amorphous motor is avoided. Stator and rotor structures are redesigned. By improving the strength of the rotor structure, not only a motor with a super high rotating speed can be made, but also excellent electromagnetic performance is provided. Only the rotor iron core is made of an amorphous alloy, processing difficulty is reduced, and process costs are reduced. A volume of the motor is not restricted by an amorphous alloy material, and therefore torque and power are higher. At a high rotating speed, an alternative frequency of a magnetic field is minimized, an iron loss is reduced, heat dissipation is decreased, and the motor can be easily controlled, so that motor performance is obviously improved, performance of the electric automobile is also indirectly significantly increased, and practicability is better.

The foregoing describes preferred implementations of the present invention in detail with reference to the accompanying drawings, but the present invention is not limited to specific details in the foregoing implementations. Many simple variations may be made to the technical solutions of the present invention within the scope of the technical idea of the present invention, and these simple variations all fall within the protection scope of the present invention.

In addition, it should be noted that, the specific technical features described in the foregoing specific implementations may be combined in any suitable manner when there is no contradiction. To avoid unnecessary repetition, various possible combination manners are not additionally described in the present invention.

In addition, any combination may be made between various different implementations of the present invention, and the combination shall also be regarded as content disclosed by the present invention provided that it does not depart from the idea of the present invention.

## Claims

1. A permanent magnet synchronous motor, comprising a shell (400), and a motor rotor (300) and a motor stator (500) installed in the shell (400), wherein the motor rotor comprises a rotor iron core (310) manufactured from an amorphous alloy material, and the motor stator (500) comprises a stator iron core manufactured by a silicon steel material.

2. The permanent magnet synchronous motor according to claim 1, wherein the rotor iron core (310) is formed by stacking a plurality of rotor punching pieces, the rotor punching piece comprises a punching piece body (100), a magnetic steel groove (200) for inserting a magnetic steel is formed on the punching piece body (100), there is a plurality of magnetic steel grooves (200), and the plurality of magnetic steel grooves (200) forms a magnetic steel groove group and the magnetic steel groove group constructs a rotor magnetic pole.

3. The permanent magnet synchronous motor according to claim 2, wherein the magnetic steel groove group comprises a first magnetic steel groove (210) and a second magnetic steel groove (220) symmetrically arranged with respect to a first diameter of the punching piece body, and the first magnetic steel groove (210) and the second magnetic steel groove (220) are arranged in a first V shape with an outward opening.

4. The permanent magnet synchronous motor according to claim 3, wherein the magnetic steel groove group further comprises a third magnetic steel groove (230) and a fourth magnetic steel groove (240) symmetrically arranged with respect to the first diameter, and the third magnetic steel groove (230) and the fourth magnetic steel groove (240) are arranged in a second V shape with an outward opening and are disposed on inner sides of radial directions of the first magnetic steel groove (210) and the second magnetic steel groove (220) at intervals.

5. The permanent magnet synchronous motor according to claim 4, wherein an included angle of the second V shape is less than an included angle of the first V shape.

6. The permanent magnet synchronous motor according to any one of claims 2 to 5, wherein there is a plurality of magnetic steel groove groups to construct a plurality of rotor magnetic poles, and a quantity of the plurality of magnetic steel groove groups is an even number and is evenly distributed on the punching piece body along a circumferential direction.

7. The permanent magnet synchronous motor according to claim 6, wherein an oil hole (103) evenly distributed along the circumferential direction is formed on the punching piece body (100), and the oil hole (103) is located between neighboring magnetic steel groove groups.

8. The permanent magnet synchronous motor according to any one of claims 2 to 7, wherein a spindle hole (101) is formed in a gyration center of the punching piece body (100), a pair of keys (102) for matching a spindle are symmetrically formed on a side wall of the spindle hole (101), the key (102) protrudes toward a circle center, and the pair of keys (102) are located on the first diameter.

9. The permanent magnet synchronous motor according to claim 3 or 4, wherein in the magnetic steel groove group, a reinforcing rib is disposed between the symmetrically arranged magnetic steel grooves, and a magnetic isolating bridge or a magnetic isolating hole is disposed between edges of the magnetic steel groove and the punching piece body.

10. The permanent magnet synchronous motor according to any one of claims 2 to 9, wherein the magnetic steel groove (200) has a straight groove section (201) along a surface direction of the punching piece body (100) and an inclination section (202) located on both sides of the straight groove section (201), and a first side edge of the inclination section (202) far away from the gyration center of the punching piece body (100) inclines outward from an end portion of the straight groove section (201).

11. The permanent magnet synchronous motor according to claim 10, wherein the two inclination sections (202) are symmetrically disposed with respect to a central axis of the straight groove section (201).

12. The permanent magnet synchronous motor according to claim 10 or 11, wherein an included angle between the first side edge of the inclination section (202) and the straight groove section (201) ranges from 0.5° to 2°.

13. The permanent magnet synchronous motor according to claim 10 or 11, wherein a second side edge of the inclination section near to the gyration center of the punching piece body (100) is arranged on a same line as the straight groove section (201).

14. The permanent magnet synchronous motor according to claim 10 or 11, wherein the straight groove section (201) occupies 1/2 to 3/4 of a length of a magnetic steel accommodated in the magnetic steel groove along a surface of the punching piece body (100).

15. The permanent magnet synchronous motor according to any one of claims 1 to 14, wherein the motor rotor (300) further comprises a spindle (320) in transmission connection to the rotor iron core (310), an inner end of the spindle (320) is installed by using a deep groove ball bearing (600), and a junction box (700) is installed on the shell.

16. The permanent magnet synchronous motor according to any one of claims 1 to 15, wherein the motor is a super high speed motor.

17. An electric automobile, comprising a drive motor, wherein the drive motor is the permanent magnet synchronous motor according to any one of claims 1 to 16.
